Europäisches Patentamt

European Patent Office

Office européen des brevets

(19)

(11) Publication number: **0 193 499**
**B1**

## EUROPEAN PATENT SPECIFICATION

(12)

(45) Date of publication of the patent specification:
25.01.89

(51) Int. Cl.⁴: **B60R 13/07**, B62D 25/07

(21) Application number: **86830037.7**

(22) Date of filing: **14.02.86**

(54) Motor vehicle bodies assembly.

(30) Priority: **26.02.85 IT 6719885**

(43) Date of publication of application:
**03.09.86 Bulletin 86/36**

(45) Publication of the grant of the patent:
**25.01.89 Bulletin 89/4**

(84) Designated Contracting States:
**DE FR GB SE**

(56) References cited:
**FR-A- 2 236 692**
**GB-A- 2 069 420**
**US-A- 4 378 130**

**PATENT ABSTRACTS OF JAPAN, vol. 8, no. 90 (M-292) [1527], 25th April 1984**

(73) Proprietor: **FIAT AUTO S.p.A., Corso Giovanni Agnelli 200, I-10135 Torino(IT)**

(72) Inventor: **Maioli, Mario, Strada S.Vincenzo 40, int.35, I-10131 Torino(IT)**
Inventor: **Piritore, Giuseppe, Via Guarini 48, I-10078 Venaria (Torino)(IT)**

(74) Representative: **Notaro, Giancarlo et al, c/o Jacobacci-Casetta & Perani S.p.A. Via Alfieri, 17, I-10121 Torino(IT)**

ACTORUM AG

## Description

This invention relates to a motor vehicle body assembly of the type indicated in the pre-characterising portion of the attached claim 1. Motor vehicle bodies of this type are known for example from GB-A 2 069 420 and US-A 4 378 130.

The problem behind this invention is that of achieving motor vehicle bodies with substantially different aesthetic features from just one type of basis body structure.

It is an object of the present invention to provide a motor vehicle body assembly of the above indicated type which is adapted to a motor vehicle body with a door of traditional type, i.e. in which the upper edge of the door runs below the side guttering of the roof, so that a door of so-called "wrap over" type, in which the upper edge of the door extends upwardly above the side guttering of the door, can be easily adapted to the basis body structure. According to the invention, this object is achieved by providing a motor vehicle body as set forth in the appended claim 1.

Preferably, in the body according to the invention the outer panels which define the front portion and rear portion of the body side are fixed by screws to the body structure. Thus, not only can different types of side doors, but also different types of outer panels be easily interchanged, so that it is possible to produce bodies with aesthetic features which are substantially different from one another, from just one body structure.

The invention will become apparent from the description which follows with reference to the appended drawings, provided purely by way of non-limiting example, in which:

Figure 1 is a diagrammatic perspective view of a motor vehicle body according to the present invention,

Figure 2 and 3 illustrate a section taken along the line II–II of Figure 1, according to two possible variants, and

Figure 4 illustrates a section taken along the line IV–IV of Figure 1.

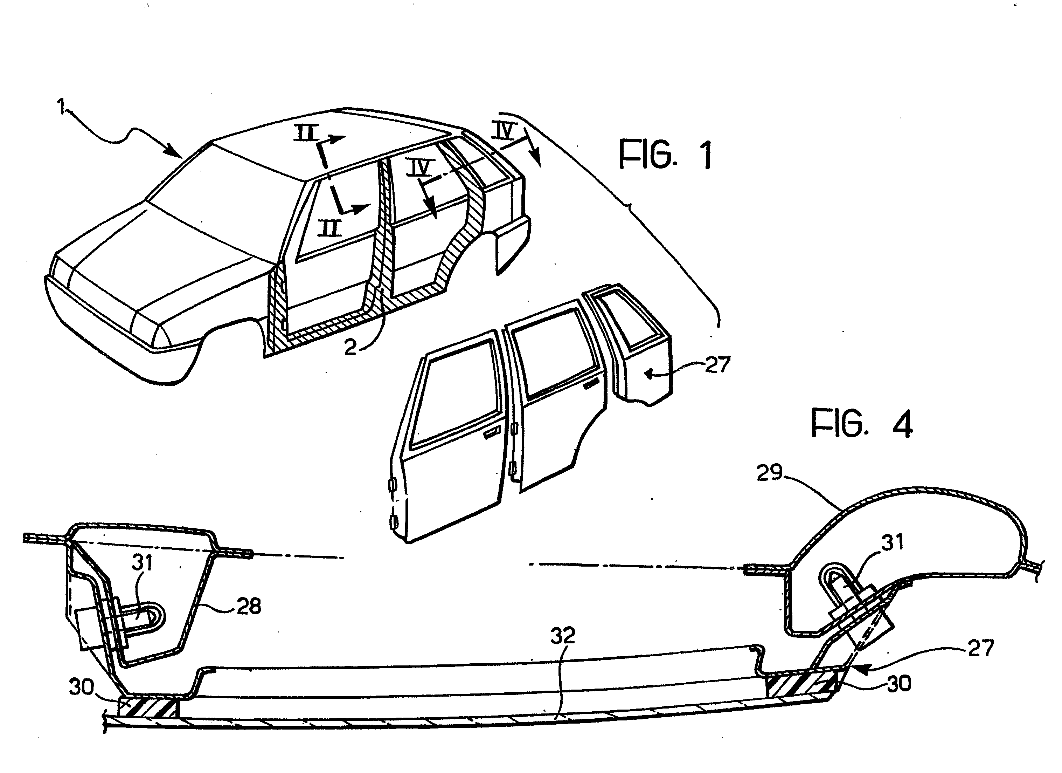

Figure 1 illustrates diagrammatically the body of a motor vehicle with four side doors. It is clear, however, that the invention is equally applicable to motor vehicles with two side doors.

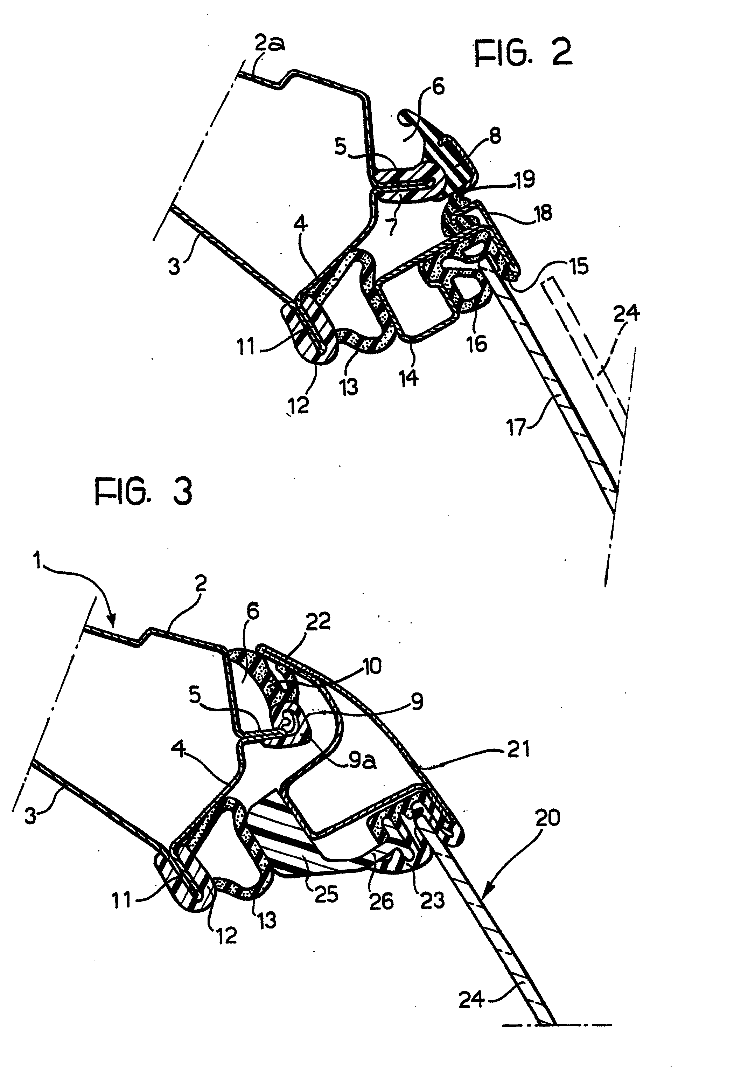

With reference to the drawings, a basis body 1 includes on each side a door opening 2 which is predisposed to allow the fitting of either a door of the traditional type (see Figure 2), in which the upper edge of the door runs below the side guttering of the roof when the door is closed, or of a door of the so-called "wrap-over" type (see Figure 3), in which the upper edge of the door extends upwardly above the side guttering of the roof.

Referring to Figures 2 and 3, the door opening 2 is defined, in correspondence with the upper edge of the door space, by a sheet metal panel 2a constituting the roof and by two further panels 3, 4. The panels 2a, 4 are welded together in correspondence with two juxtaposed flattened edges which form a flange 5 defining, at the bottom, the channel 6 of the side guttering of the roof.

In the case of the assembly illustrated in Figure 2, a profiled element of plastics material 7 is fitted onto the flange 5 to which is fixed a relatively hard rubber element 8 which laterally delimits the channel 6 of the guttering. In the case of the assembly of Figure 3, however, the flange 5 is fitted with a profiled element 9 comprising a portion 9a of plastics material and a weather strip 10 of deformable material, which laterally demits the channel 6 of the guttering and comes into contact with the upper edge of the door when the latter is closed. In Figure 3, the weather strip 10 is shown in the deformed state in which it is kept by the door when the latter is closed. In the non-deformed condition of the weather strip 10, adopted when the door is open, the channel 6 of the side guttering of the roof will be upwardly open.

The sheet metal panels 3, 4 are welded together in correspondence with two juxtaposed, flattened edges which define a flange 11. In both the arrangements of Figures 2 and 3, a profiled element 12 of plastics material, which supports a rubber seal 13 intended to cooperate with the door structure, is fitted onto the flange 11.

In the case illustrated in Figure 2, a traditional type of door, having a frame 14 whose upper edge runs below the side guttering of the roof when the door is closed is fitted to the body. The frame 14 has a channel 15 which accommodates a rubber seal 16 cooperating with the upper edge of the glass 17 of the window. The frame 14 also has a projection 18 to which is fixed an auxiliary seal 19 intended to ensure sealing between the door and the element 8 of the guttering when the door is closed.

In the case illustrated in Figure 3, however, a door 20 of the so-called "wrap-over" type, having a frame 21 whose upper edge 22 extends upwardly above the channel 6 of the side guttering of the roof, is fitted to the body. The frame 21 carries a rubber seal 23 which cooperates with the glass 24 of the window.

The particular structure of the door 20 requires an arrangement displaced more towards the outside of the window glass 24 than the window glass 17 of the door of traditional type, as can be seen in Figure 2, in which the position of the window 24 is shown by broken lines. In order to allow the correct engagement of the structure of the door 20 with the weather strip 13, an auxiliary element 25 of plastics material (see Figure 3) is provided which is carried by the structure of the door and is interposed between the latter and the weather strip 13 when the door is closed. The element 25 has an appendage 26 which is used to support the weather strip 23.

As is clear from the preceding description, the structure described above is prearranged to allow the fitting of two different type of door on the same type of basis body structure. It is thus possible to produce bodies with notably different aesthetic characteristics from just one body structure.

Figure 4 shows, in section, the fitting of an outer panel 27 to the rear portion of the side of the body (also see Figure 1).

In Figure 4, box elements, indicated 28 and 29, define respectively the rear pillar of the rear side door opening and the side pillar of the rear window. The panel 27, which carries a window glass (32) fixed thereto by layers of adhesive 30, is secured to the elements 28, 29 by screws 31.

The same type of mounting is also provided for other outer panels of the body, whether in correspondence with the rear portion or in correspondence with the front portion thereof.

By virtue of the characteristics described above, it is therefore possible substantially to modify the general appearance of the body by using, all the same, just one body structure.

## Claims

1. Motor vehicle body assembly having a motor vehicle basis body structure (1) with a door opening on each side (2), the upper edge of which has a first flange (11) for the fixing of a weather strip (12, 13) intended to cooperate with the door structure and a second flange (5) which defines the bottom of the side gattering (6) of the body roof panel (2a), said second flange (5) being fitted with a profiled element (9) comprising a deformable weather strip (10) which laterally defines the side guttering (6) of the roof panel (2a) and comes into contact with the upper edge of the door (20) when the latter is closed, said door upper edge extending upwardly above the side guttering of the roof, characterised in that the door (20) is provided on its inner side with an auxiliary element (25) of plastics material which cooperates with the weather strip (13) carried by the first flange (11) when the door is closed, said auxiliary element (15) serving as a spacer element between the weather strip (12, 13) and the door structure (21).

2. Motor vehicle body assembly according to claim 1, characterised in that said plastics auxiliary element (25) has an appendage (26) supporting a weather strip (23) cooperating with the window glass (24) of the door (20).

3. Motor vehicle body assembly according to claim 1, characterised in that the outer panels (27) which define the front portion and the rear portion of each body side are fixed by screws (31) to the body structure (29).

## Patentansprüche

1. Kraftfahrzeug-Karosseriebaugruppemit einem Karosseriegrundkörper (1) mit jeweils einer Türöffnung (2) auf jeder Seite, deren obere Kante einen ersten Flansch (11) zur Befestigung einer mit der Türkonstruktion zusammenwirkenden Wetterleiste (12, 13) sowie einen zweiten Flansch (5) aufweist, der den Boden der seitlichen Regenrinne (6) des Karosserie-Dachteils (2a) bildet, wobei auf dem zweiten Flansch (5) ein Profilelement (9) aufgebracht ist, das eine verformbare Wetterleiste (10) umfaßt, die die seitliche Regenrinne des Karosserie-Dachteils (2a) seitlich begrenzt und mit der oberen Kante der Tür (20) in Kontakt kommt, wenn letztere geschlossen wird, und wobei die obere Kante der Tür nach oben über die seitliche Regenrinne des Dachs ragt, dadurch gekennzeichnet, daß die Tür (20) an ihrer Innenseite mit einem zusätzlichen Element (25) aus Kunststoff versehen ist, das bei geschlossener Tür mit der von dem ersten Flansch (11) getragenen Wetterleiste (13) zusammenwirkt und als Abstandselement zwischen der Wetterleiste (12, 13) und der Türkonstruktion (21) dient.

2. Kraftfahrzeug-Karosseriebaugruppe nach Anspruch 1, dadurch gekennzeichnet, daß das zusätzliche Element (25) aus Kunststoff einen Ansatz (26) besitzt, der eine Halterung für eine mit der Fensterscheibe (24) der Tür (20) zusammenwirkende Wetterleiste (23) bildet.

3. Kraftfahrzeug-Karosseriebaugruppe nach Anspruch 1, dadurch gekennzeichnet, daß die den vorderen Teil und den hinteren Teil jeder Karosserieseite bildenden äußeren Panele (27) mit Schrauben an der Karosseriekonstruktion (29) befestigt sind.

## Revendications

1. Assemblage de caisse de véhicule automobile comportant une structure de caisse de véhicule automobile (1) présentant de chaque côté une ouverture de porte (2) dont le bord supérieur présente un premier rebord (11) pour la fixation d'une bande d'étanchéité (12, 13) destinée à coopérer avec la structure de porte et un second rebord (5) qui définit le fond de la gouttière latérale (6) du panneau de toit de caisse (2a); ledit second rebord (5) étant muni d'un élément profilé (9) comprenant une bande d'étanchéité déformable (10) qui délimite latéralement la gouttière latérale (6) du panneau de toit (2a) et entre en contact avec le bord supérieur de la porte (20) quand celle-ci est fermée, ledit bord supérieur de porte s'étendant vers le haut au-dessus de la gouttière latérale du toit, caractérisé en ce que la porte (20) est munie sur son côté intérieur d'un élément auxiliaire (25) en matière plastique qui coopère avec la bande d'étanchéité (13) portée par le premier rebord (11) quand la porte est fermée, ledit élément auxiliaire (25) faisant office d'élément d'entretoisement entre la bande d'étanchéité (12, 13) et la structure de porte (21).

2. Assemblage de caisse de véhicule automobile selon la revendication 1, caractérisé en ce que ledit élément auxiliaire en plastique (25) présente un appendice (26) supportant une bande d'étanchéité (23) coopérant avec la glace de fenêtre (24) de la porte (20).

3. Assemblage de caisse de véhicule automobile selon la revendication 1, caractérisé en ce que les panneaux extérieurs (27) qui délimitent la partie avant et la partie arrière de chaque côté de caisse sont fixés par des vis (31) à la structure de caisse (29).

FIG. 1

FIG. 4

EP 0 193 499 B1

FIG. 2

FIG. 3